# EUROPÄISCHE PATENTANMELDUNG

(11) **EP 2 740 677 A1**
(43) Veröffentlichungstag der Anmeldung: **11.06.2014**
(21) Anmeldenummer: 12008234.2
(22) Anmeldetag: 10.12.2012
(51) Int. Cl.: B65B 41/14, B65H 20/16, B65G 17/32, B65H 29/04, B65B 9/04, F16G 13/00

(54) **Transporteinrichtung für Tiefziehverpackungsmaschine**

(71) Anmelder: Multivac Sepp Haggenmüller GmbH & Co. KG, 87787 Wolfertschwenden (DE)
(72) Erfinder: Kurz, Gunnar, 87700 Memmingen (DE)
(74) Vertreter: Grünecker, Kinkeldey, Stockmair & Schwanhäusser

(57) **Zusammenfassung**

Die Erfindung betrifft eine Transporteinrichtung (6) zum Führen und Transportieren einer Materialbahn (4) in einer Tiefziehverpackungsmaschine (1) mit einer an beiden Längsseiten eines Maschinenrahmens (2) angeordneten Transportketten (7), Kettenrädern (8) und Führungseinrichtungen (10, 11).

## Beschreibung

Die Erfindung bezieht sich auf eine Transporteinrichtung für eine Tiefziehverpackungsmaschine gemäß den Merkmalen des Anspruchs 1.

Aus der DE 33 15 419 A1 ist eine Transporteinrichtung in einer Tiefziehverpackungsmaschine, auch als Klammerkette bezeichnet, zum Führen und Transportieren einer Materialbahn bekannt. Die Klammerkette weist eine Gliederkette mit Kettengliedern und einer Vielzahl von Klemmbacken auf, wobei feste Klemmbacken mittels einer Nietverbindung mit einem Bolzen jeweils mit einem Kettenglied verbunden sind. Die bewegliche Klemmbacke weist eine Bohrung auf, die mittels einer Bundbuchse, die an der festen Klemmbacke angebracht ist, aufgenommen ist, um die bewegliche Klemmbacke gegenüber der festen Klemmbacke zu halten und auch bewegen zu können. Eine Druckfeder, die zwischen der festen und beweglichen Klemmbacke angeordnet ist, sorgt für eine Vorspannung in geschlossener Stellung, in der die Materialbahn zwischen der beweglichen und festen Klemmbacke geklemmt wird.

Die bekannte Klammerkette weist einerseits den Nachteil auf, dass die festen Klammerbacken mit den Kettengliedern verbunden werden müssen und dies einen hohen Montageaufwand bedeutet. Andererseits sind einige Spalte zwischen dem Kettenglied und der festen Klammerbacke und zwischen den Kettengliedern selbst vorhanden, die schwer zu reinigen sind und somit aus hygienischen Gründen ungünstig sind.

Für ein völlig anderes technisches Gebiet, nämlich das der Verbrennungsmotoren, offenbart die DE 103 51 125 A1 eine Hybridkette zur Kraftübertragung.

Aufgabe der vorliegenden Erfindung ist es, eine verbesserte Transporteinrichtung für eine Tiefziehverpackungsmaschine zur Verfügung zu stellen.

Diese Aufgabe wird gelöst durch eine Transporteinrichtung mit den Merkmalen des Anspruchs 1. Vorteilhafte Weiterbildungen der Erfindung sind in den Unteransprüchen angegeben.

Die erfindungsgemäße Transporteinrichtung zum Führen einer Materialbahn in einer Tiefziehverpackungsmaschine mit an beiden Längsseiten eines Maschinenrahmens angeordneten Transportketten, Kettenrädern und in einer Produktionsrichtung ausgerichteten Führungseinrichtungen zum Führen der Transportkette zeichnet sich dadurch aus, dass ein Kettenglied der Transportkette und eine Klammerführung gemeinsam und einstückig als ein Formteil ausgeführt sind. So können Spalte, die schwer zu reinigen sind, vermieden oder zumindest die Anzahl von Spalten verringert werden. Ebenso bringt es den Vorteil, dass die Anzahl der zu montierenden Bauteile verringert wird.

Vorzugsweise weist das Formteil an seiner Ober- und Unterseite wenigstens ein Führungselement zur Aufnahme in den Führungseinrichtungen auf, um Querkräfte aufzunehmen, die durch das seitliche Halten der Materialbahn unter Vorspannung entstehen.

In einer besonders vorteilhaften Ausführung ist das Formteil als Feingußteil oder Sinterteil oder Spritzgußteil ausgeführt. Bei solchen Materialien können Lagersitze und Führungsflächen ohne nachträgliche spanende Bearbeitung erzeugt werden. Es sind auch Materialien mit Gleiteigenschaften denkbar.

Bevorzugt sind die Führungseinrichtungen wenigstens für ein Obertrum der Transportketten vorgesehen, um Kräfte quer zur Produktionsrichtung aufzunehmen, da das Obertrum der Transportkette die Materialbahn hält, während das Untertrum die Rückführung der umlaufenden Transportketten darstellt.

Das Formteil weist bevorzugt in Produktionsrichtung an einer ersten Seite eine erste und zweite Gelenkkontur auf und weist an einer gegenüberliegenden zweiten Seite eine dritte Gelenkkontur auf, wobei zum Zusammenfügen von zwei Formteilen die dritte Gelenkkontur eines Formteils zwischen der ersten und zweiten Gelenkkontur eines weiteren Formteils vorgesehen ist.

Das Formteil weist vorzugsweise zwei koaxial zueinander ausgerichtete Bohrungen zur Aufnahme eines Bolzens auf und eine weitere Bohrung zur Aufnahme eines weiteren Bolzens, um Formteile zu einer Kette miteinander gelenkig verbinden zu können.

Eine vorteilhafte Ausführungsform sieht vor, dass die Gelenkkonturen jeweils eine Ausformung aufweisen, die zum Eingriff in das Kettenrad vorgesehen ist, um die Transportkette in Produktionsrichtung intermittierend bewegen zu können.

Bevorzugt ist ein Klammerteil, das zum Halten der Materialbahn zusammen mit der Klammerführung vorgesehen ist, relativ zur Klammerführung beweglich ausgeführt, um ein Freigeben und Klemmen der Materialbahn auf einfache Weise zu ermöglichen.

Vorzugsweise ist eine Druckfeder zwischen dem Klammerteil und der Klammerführung vorgesehen und dazu ausgebildet, um die Klemmkraft zum Halten der Materialbahn aufzubringen.

Im Folgenden wird ein vorteilhaftes Ausführungsbeispiel der Erfindung anhand einer Zeichnung näher erläutert. Im Einzelnen zeigen:
- Fig. 1: eine Tiefziehverpackungsmaschine mit einer erfindungsgemäßen Transporteinrichtung in einer schematischen Seitenansicht,
- Fig. 2: die Transporteinrichtung in einer Ansicht von oben,
- Fig. 3: die Transporteinrichtung in einer Ansicht von unten,
- Fig. 4: die Transporteinrichtung in einer weiteren Ansicht von oben,
- Fig. 5a: ein Formteil als Einzelansicht,
- Fig. 5b: eine Variante eines Formteils als Einzelansicht, und
- Fig. 6: Formteile als Baugruppe mit Führungseinrichtungen.

Gleiche Komponenten sind in den Figuren durchgängig mit gleichen Bezugszeichen versehen.

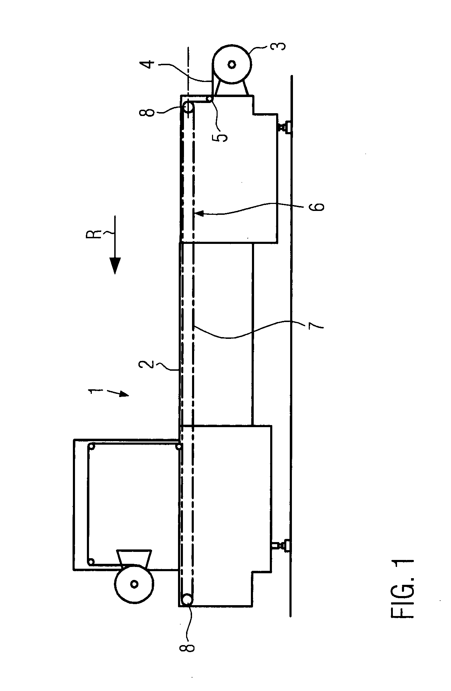

Fig. 1 zeigt eine Tiefziehverpackungsmaschine 1 mit einem Maschinenrahmen 2 und an dessen Eingangsseite eine Rolle 3. Von der Rolle 3 wird eine Materialbahn 4, beispielsweise eine Folienbahn, abgezogen und über eine Rolle 5 zu einer erfindungsgemäßen Transporteinrichtung 6 geführt. Die Transporteinrichtung 6 weist auf beiden Seiten der Materialbahn 4 entlang einer Produktionsrichtung R jeweils eine Transportkette 7 auf, die an ihren Umlenkpunkten an beiden Enden des Maschinenrahmens 2 über Kettenräder 8 umgelenkt und zum Teil angetrieben werden. Die in Fig. 1 nicht näher dargestellten Transportketten 7 weisen Klammern auf, mit denen die Materialbahn 4 seitlich ergriffen und in Produktionsrichtung R durch die nicht näher dargestellten Bearbeitungsstationen wie Formstation, Siegelstation und Schneidstation der Tiefziehverpackungsmaschine 1 geführt wird. An der Ausgangsseite der Tiefziehverpackungsmaschine 1 wird die Materialbahn 4 von den Klammern wieder freigegeben.

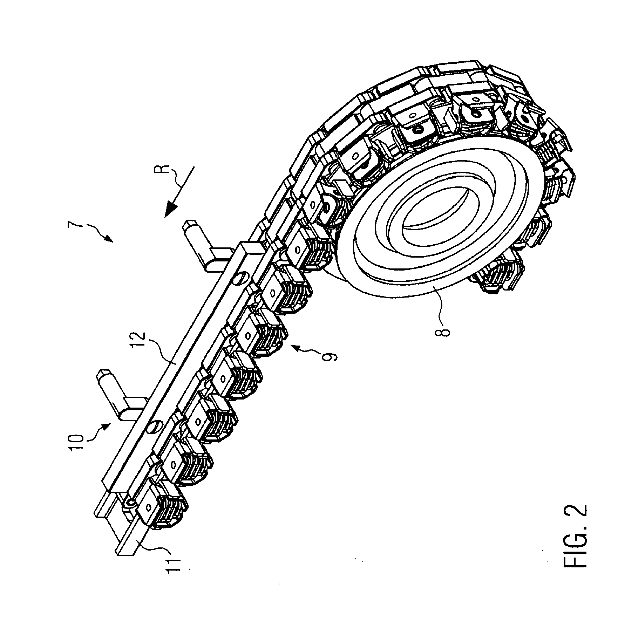

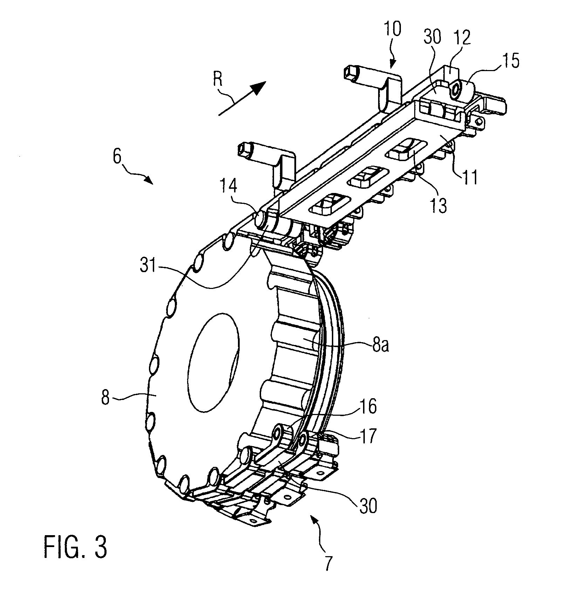

Fig. 2 und Fig. 3 zeigen die Transportkette 7, die über das Kettenrad 8 umgelenkt und angetrieben wird. Das Obertrum 9 der Transportkette 7 ist zwischen einer oberen Führungseinrichtung 10 und einer unteren Führungseinrichtung 11 geführt, um quer zur Produktionsrichtüng R auftretende Kräfte aufzunehmen, damit die Materialbahn 4 während des Transports immer seitlich gespannt gehalten werden kann. Die auftretenden Kräfte können durch ein Schrumpfen der Materialbahn 4 beispielsweise durch einen Wärmeeintrag in der Form- oder Siegelstation oder durch konisch auseinanderlaufende Führungseinrichtungen 10, 11 entstehen. Die Führungseinrichtungen 10, 11 sind dabei vorzugsweise am Maschinenrahmen 2 befestigt. Da die obere Führungseinrichtung 10 in der gezeigten Ausführung nur eine Führungsleiste 12 aufweist und die untere Führungseinrichtung 11 Öffnungen 13, wie in Fig. 3 gezeigt, aufweist, ist die Transporteinrichtung 6 leicht reinigbar. Die Führungseinrichtungen 10, 11 sind beispielsweise aus einem Kunststoff mit guten Gleiteigenschaften und vorzugsweise faserverstärkt ausgeführt. Bolzen 14, mittels derer die Kettenglieder bzw. Formteile 30 der Transportkette 7 miteinander verbunden sind, können als seitliche Führungsanlage mit der unteren Führungseinrichtung 11 zusammenwirken. Sind die Bolzen 14 in dem Formteil 30 versenkt, so dass ihre Enden nicht über das Formteil 30 hinausstehen, so dienen die Flächen des Formteils 30, die sich mit der unteren Führungseinrichtung 11 in Kontakt befinden, als Anlagefläche gegenüber der unteren Führungseinrichtung 11.

Gelenkkonturen 15, 16, 17 des Formteils 30 weisen jeweils eine Ausformung 31 auf, die zum Eingriff in das Kettenrad 8 geeignet ist, und sind so gestaltet, dass das Antriebsmoment von einem nicht dargestellten Motor auf die Transportkette 7 übertragen werden kann. Speziell dient dabei die beispielsweise zylinderförmig gekrümmte Außenseite der Gelenkkonturen 15, 16, 17 als Ausformung 31, die in ihrer Kontur angepasst ist an eine Aussparung 8a des Kettenrads 8. Im Betrieb kann sich die Ausformung 31 in die Aussparung 8a des Kettenrads 8 einlegen. Im dargestellten Ausführungsbeispiel sind an allen drei Gelenkkonturen 15, 16, 17 des Formteils 30 entsprechende Ausformungen 31 zum Eingriff in das Kettenrad 8 vorhanden. Es würde jedoch genügen, wenn zumindest eine Gelenkkontur, vorzugsweise aber die beiden axial miteinander ausgerichteten Gelenkkonturen 16, 17 des Formteils 30 über eine Ausformung 31 zum Eingriff in das Kettenrad 8 verfügen.

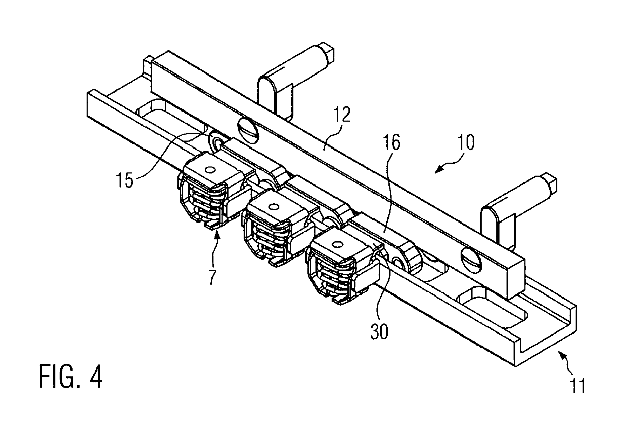

In Fig. 4 ist dargestellt, wie ein Formteil 30 in der oberen Führungseinrichtung 10 durch zwei Erhebungen einer zweiten 16 und dritten Gelenkkontur 17 mittels der Führungsleiste 12 geführt ist. Zusätzlich zur oberen Führungseinrichtung 10 wird das Formteil 30 mittels der jeweiligen Außenseite der zweiten 16 und dritten (durch die Führungsleiste 12 verdeckt) Gelenkkontur 17 in der unteren Führungseinrichtung 11 geführt. Somit liegt eine verdreh- und kippsichere Führung der einzelnen Formteile 30 und damit der Transportkette 7 vor.

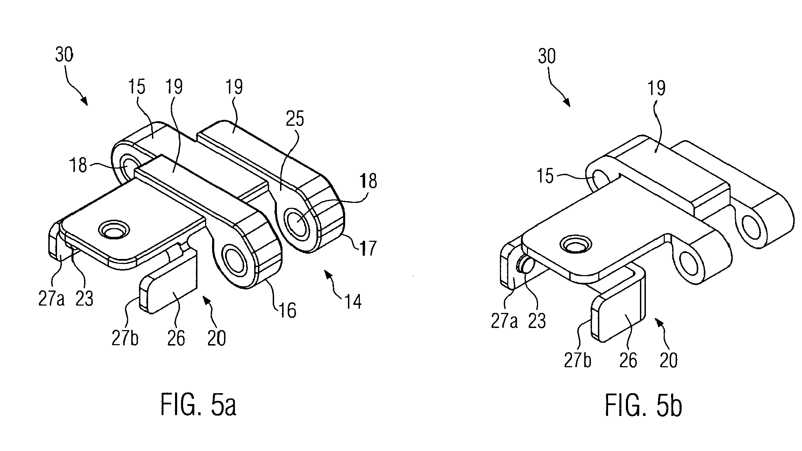

In Fig. 5a ist ein Formteil 30 als Einzelteil in der bisher beschriebenen Ausführung dargestellt. Es sind ein Kettenglied 14 und eine Klammerführung 20 gezeigt, die gemeinsam als ein einziges, einstückiges Formteil 30 ausgeführt sind. Das Formteil 30 weist eine erste Gelenkkontur 15 auf der linken Seite und eine zweite 16 und dritte Gelenkkontur 17 auf der rechten Seite der Ansicht mit jeweils einer konzentrisch zueinander liegenden Bohrung 18 auf, die für eine Bolzenverbindung mit einem weiteren Formteil 30 konfiguriert sind. Der Abstand innerhalb der zweiten 16 und dritten Gelenkkontur 17 entspricht der Breite der ersten Gelenkkontur 15, die auf der linken/rechten Seite des Formteils 30 angeordnet ist. Die erste Gelenkkontur 15 weist ebenso eine Bohrung 18 für die Bolzenverbindung mit der zweiten 16 und dritten Gelenkkontur 17 eines benachbarten Formteils 30 auf. Die Bohrung 18 kann auch zur Aufnahme von Gleitlagern ausgeführt sein.

Das z.B. metallische Formteil 30 umfasst zwei Führungselemente 19 an seiner Oberseite, die in die Ausformung der zweiten 16 und dritten Gelenkkontur 17 integriert sind. Die inneren Seitenflächen 25 bilden Kontaktflächen gegenüber der Führungsleiste 12.

Die Fig. 5b zeigt eine weitere Ausführung des Formteils 30, die sich von dem Formteil 30 der Fig. 5a darin unterscheidet, dass die erste Gelenkkontur 15 ein Führungselement 19 an der Oberseite aufweist, wobei die obere Führungseinrichtung 10 nicht eine, sondern zwei Führungsleisten 12 aufweisen würde, um zwischen diesen Führungsleisten 12 das Führungselement 19 zu führen.

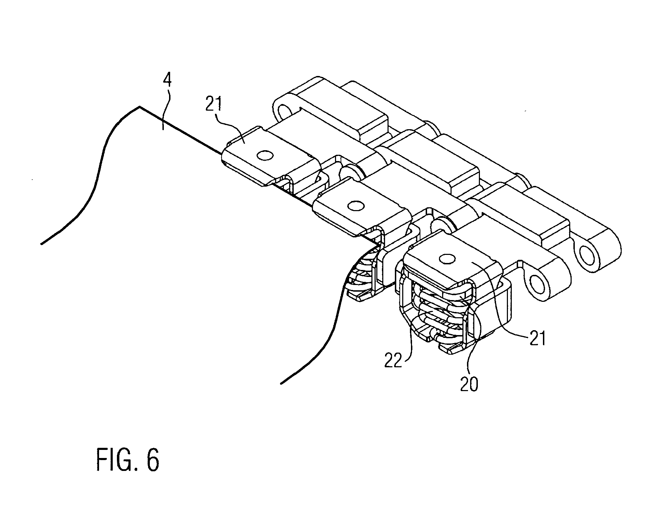

Die in den Darstellungen der Fig. 5a und 5b zum Betrachter hin ausgerichtete Klammerführung 20 weist eine Lasche 26 auf, die zur Aufnahme und Führung eines Klammerteils 21 (siehe Fig. 6) vorgesehen ist. Die Lasche 26 weist an beiden inneren Führungsflächen 27a, b für das Klammerteil 21 eine bolzenartige Erhebung 23 auf, die mit nicht näher dargestellten Ausnehmungen des Klammerteils 21 zur Führungsfunktion zusammenwirken.

Um die Materialbahn 4 zu erfassen, wird wie in Fig. 6 dargestellt die Materialbahn 4 von dem Klammerteil 21 gegen die obere Auflagefläche der Klammerführung 20 gedrückt. Diese Klemmkraft wird durch eine Druckfeder 22 erzeugt, die eine untere Lasche des Klammerteils 21 nach unten drückt und sich dabei an der unteren Seite der Auflagefläche der Klammerführung 20 abstützt. Die Lasche 26 weist an beiden Führungsflächen 27a, b für das Klammerteil 21 eine bolzenartige Erhebung 23 auf, die mit nicht dargestellten Ausnehmungen des Klammerteils 21 zur Führungsfunktion zusammenwirken.

## Patentansprüche

1. Transporteinrichtung (6) zum Führen einer Materialbahn (4) in einer Tiefziehverpackungsmaschine (1), mit an beiden Längsseiten eines Maschinenrahmens (2) angeordneten Transportketten (7), Kettenrädern (8) und in einer Produktionsrichtung (R) ausgerichteten Führungseinrichtungen (10, 11), **dadurch gekennzeichnet, dass** ein Kettenglied (14) der Transportkette (7) und eine Klammerführung (20) gemeinsam und einstückig als ein Formteil (30) ausgeführt sind.

2. Transporteinrichtung nach Anspruch 1, **dadurch gekennzeichnet, dass** das Formteil (30) an seiner Ober- und Unterseite wenigstens ein Führungselement (19) zur Aufnahme in den Führungseinrichtungen (10, 11) aufweist.

3. Transporteinrichtung nach einem der vorangehenden Ansprüche, **dadurch gekennzeichnet, dass** das Formteil (30) als Feingußteil oder Sinterteil oder Spritzgußteil ausgeführt ist.

4. Transporteinrichtung nach einem der vorangehenden Ansprüche, **dadurch gekennzeichnet, dass** die Führungseinrichtungen (10, 11) wenigstens für ein Obertrum (9) der Transportketten (7) vorgesehen sind, um Kräfte quer zur Produktionsrichtung (R) aufzunehmen.

5. Transporteinrichtung nach einem der vorangehenden Ansprüche, **dadurch gekennzeichnet, dass** das Formteil (30) in Produktionsrichtung (R) an einer ersten Seite eine erste (15) Gelenkkontur (16) aufweist und an einer gegenüberliegenden zweiten Seite eine zweite und dritte Gelenkkontur (16, 17) aufweist, wobei nach einem Zusammenfügen von zwei Formteilen (30) die erste Gelenkkontur (15) eines Formteils (30) zwischen der zweiten und dritten Gelenkkontur (16, 17) eines benachbarten Formteils (30) vorgesehen ist.

6. Transporteinrichtung nach Anspruch 5, **dadurch gekennzeichnet, dass** das Formteil (30) zwei koaxial zueinander ausgerichtete Bohrungen (18) zur Aufnahme eines Bolzens (14) aufweist und eine weitere Bohrung (18) zur Aufnahme eines weiteren Bolzens (14) aufweist.

7. Transporteinrichtung nach Anspruch 5 oder 6, **dadurch gekennzeichnet, dass** mindestens eine der Gelenkkonturen (15, 16, 17) eine Ausformung (31) aufweist, die zum Eingriff in das Kettenrad (8) vorgesehen ist.

8. Transporteinrichtung nach einem der vorangehenden Ansprüche, **dadurch gekennzeichnet, dass** ein Klammerteil (21), das zum Halten der Materialbahn (4) zusammen mit der Klammerführung (20) vorgesehen ist, relativ zur Klammerführung (20) beweglich ausgeführt ist.

9. Transporteinrichtung nach Anspruch 8, **dadurch gekennzeichnet, dass** eine Druckfeder (22) zwischen dem Klammerteil (21) und der Klammerführung (20) vorgesehen ist, um die Klemmkraft zum Halten der Materialbahn (4) aufzubringen.
